# EUROPEAN PATENT APPLICATION

(11) **EP 4 663 811 A1**
(43) Date of publication of application: **17.12.2025**
(21) Application number: 25182415.7
(22) Date of filing: 12.06.2025
(51) Int. Cl.: C23F 13/00, F16L 58/00, C02F 1/461, C02F 1/48, C02F 1/20, C02F 103/02, C02F 1/38

(54) **A WATER TREATMENT UNIT**

(30) Priority: 12.06.2024 GB 202408435
(71) Applicant: International Water Treatment Maritime AS, 3470 Slemmestad (NO)
(72) Inventor: Whitfield, David, Surrey (NO)
(74) Representative: Rogan, Jack William

(57) **Abstract**

The present invention relates to a water treatment unit for improving the quality of water in a water system. The water treatment unit comprises a container having an inlet and an outlet configured to allow water to flow into and out of the container, respectively. The water treatment unit further comprises at least one magnet, at least one sacrificial anode, and a filter element. The at least one magnet is configured to attract ferrous particles and retain ferrous particles to remove the ferrous particles from the water flowing through the container. The at least one sacrificial anode is configured to provide anodic protection and scavenge oxygen from the water flowing through the container. The filter element is configured to remove detritus from the water flowing out of the container. The at least one magnet and the at least one sacrificial anode are located in the container. The filter element is located outside of the container downstream of the outlet.

## Description

### Technical Field

The present invention relates to a water treatment unit for improving the quality of water in a water system.

### Background of the Invention

It is known that water systems in land and marine installations that are used for heating and/or cooling suffer from adverse effects as a result of poor water quality. When poor quality water circulates within a water system, the conditions for corrosion are often present. Corrosion of components of the water system can lead to malfunction of the water system, which can require expensive repairs. Furthermore, corrosion products can coat surfaces of elements within the water system and reduce the efficiency of the heat transfer components.

### Summary

In a first aspect of the present invention, there is provided a water treatment unit for improving the quality of water in a water system; the water treatment unit comprising a container having an inlet and an outlet configured to allow water to flow into and out of the container, respectively; at least one magnet configured to attract ferrous particles and retain ferrous particles to remove the ferrous particles from the water flowing through the container; at least one sacrificial anode configured to provide anodic protection and scavenge oxygen from the water flowing through the container; and a filter element configured to remove detritus from the water flowing out of the container; wherein the at least one magnet and the at least one sacrificial anode are located in the container, and the filter element is located outside of the container downstream of the outlet.

In some embodiments, the container may comprise a deaerator element that extends across the container and divides the container into an upper section comprising the inlet and the outlet, and a lower section comprising the at least one magnet and the at least one sacrificial anode.

In some embodiments, the deaerator element may comprise a mesh.

In some embodiments, the deaerator element may be electrically connected to the container to increase the anodic surface of the water treatment unit.

In some embodiments, the deaerator element may comprise an aperture configured to receive an outlet pipe.

In some embodiments, an outlet pipe may extend from the lower section of the container through the aperture in the deaerator element and to the outlet.

In some embodiments, the outlet pipe may comprise a perforated section configured to allow water to pass from the lower section of the container into the outlet pipe.

In some embodiments, the filter element may be a cylindrical filter element configured such that the water flowing through the container has to pass through the filter element before the water can re-enter a water system.

In some embodiments, the filter element may comprise a 40 um mesh. In some embodiments, the filter element may comprise a stainless steel mesh.

In some embodiments, the at least one sacrificial anode may be located in the lower section of the container.

In some embodiments, the water treatment unit may comprise a plurality of sacrificial anodes. In some embodiments, the plurality of sacrificial anodes may be spaced around the outlet pipe in the lower section of the container.

In some embodiments, the water treatment unit may further comprise an anode support configured to suspend the at least one sacrificial anode within the lower section of the container.

In some embodiments, the at least one sacrificial anode may be an unmeshed anode.

In some embodiments, the at least one sacrificial anode may be formed from magnesium.

In some embodiments, the at least one magnet may be located proximate a bottom wall of the container. In some embodiments, the magnet may be located in a magnet housing.

In some embodiments, the magnet housing may extend into the lower section of the container.

In some embodiments, the magnet may extend at an acute angle to the longitudinal axis of the container.

In some embodiments, the magnet may be formed from neodymium, and optionally comprises a stainless steel coating.

In some embodiments, the water treatment unit may further comprise a pressure vent located in a top wall of the container, the pressure vent being configured to allow gas to exit the container.

In some embodiments, the water treatment unit may further comprise a drain located in the bottom wall of the container, the drain comprising a drain pipe and a drain valve configured to allow water to exit the container to be drained.

In another aspect of the present invention, there is provided a water system comprising a water treatment unit according to any one of claim 1 to claim 23.

### Brief Description of the Drawings

So that the present invention may be more fully understood, embodiments of the present invention will now be described, by way of example only, with reference to the accompanying drawings, in which:
Fig. 1 shows a schematic front view of a water treatment unit with portions of the housing cut-away to reveal components inside the water treatment unit;
Fig. 2 shows a schematic cross-sectional side view of the water treatment unit of Fig. 1;
Fig. 3 shows a cross-sectional top view of the water treatment unit of Fig. 1; and
Fig. 4 shows a schematic view of a water system comprising a water treatment unit.

### Detailed Description

Water systems in land and marine installations that are used for heating and/or cooling suffer from adverse effects resulting from poor water quality. When the quality of the water within a water system is poor, the conditions for corrosion are often present.

The main conditions that allow for corrosion of elements of a water system to take place include the water having a low pH, the water having a high oxygen content, and water containing a high amount of minerals that lead to a high conductivity.

When these conditions are present, elements of a water system can corrode. Not only can corrosion of elements of the water system cause damage and leaks within the system, but corrosion products can also enter into the water system. These corrosion products can cause wear on other elements, such as pumps, which can reduce the efficiency of the water system. Furthermore, in water systems responsible for the transfer of heat, i.e. heating and/or cooling systems, the corrosion products and sludge can be deposited and can build up on heat transfer elements. Thus can further reduce the efficiency of the heating and/or cooling system.

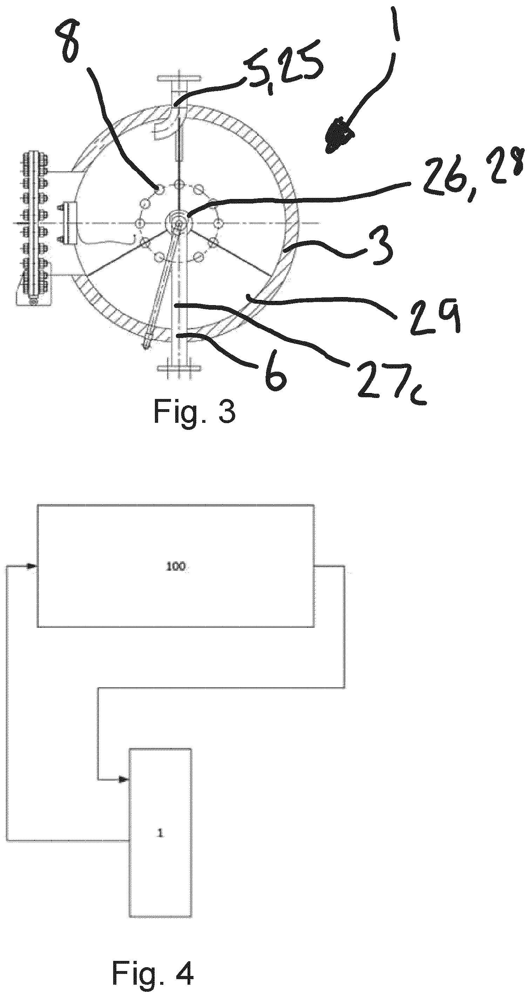

The present invention provides a water treatment unit 1 that improves the quality of the water in a water system 100, shown in Fig. 4. The water system 100 may be a heating and/or cooling system such as, for example, but not limited to, HVAC systems, technical coolers, boilers, heat pumps, solar heating, and underfloor heating. The present invention improves the quality of the water in the water system 100 by increasing the pH of the water in the water system 100, by removing or scavenging oxygen from the water in the water system 100, and by removing particles from the water in the water system 100 to lower its conductivity and keep the water clean.

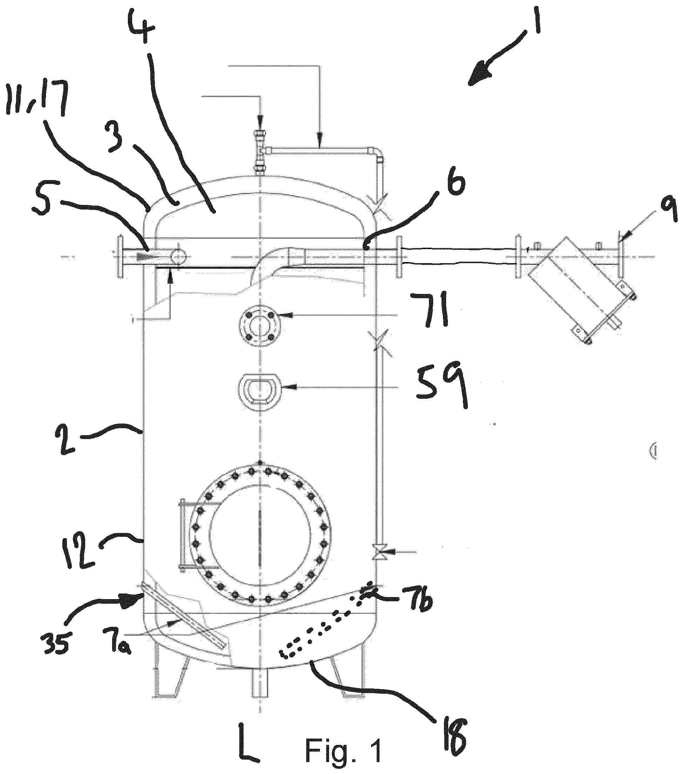

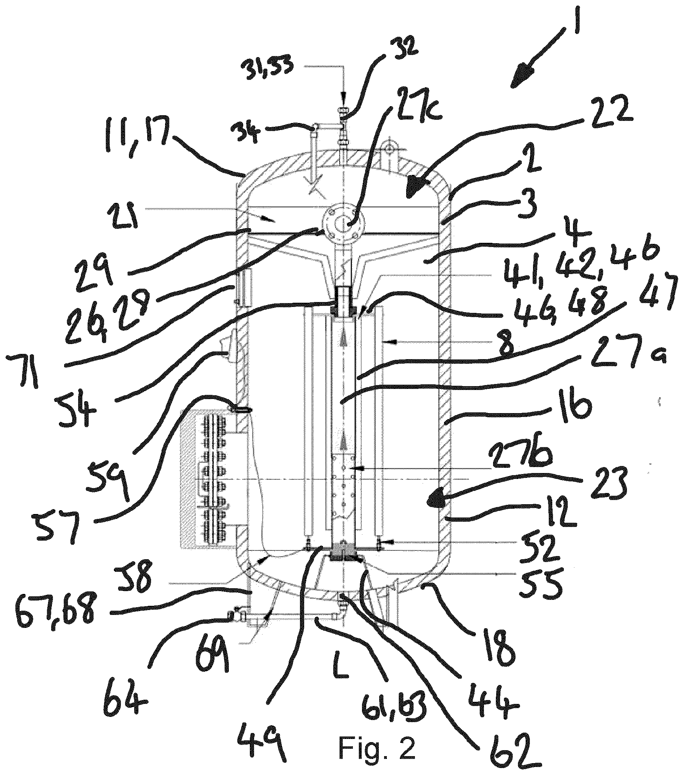

Referring now to Fig. 1 and Fig. 2, there is shown an embodiment of a water treatment unit 1. Fig. 1 shows a schematic front view of the water treatment unit 1 with portions cut-away to clearly illustrated components of the water treatment unit 1. Fig. 2 shows a schematic cross-sectional view of the water treatment unit 1 of Fig. 1.

The water treatment unit 1 is configured to improve the quality of water in a water system 100. The water treatment unit 1 comprises a housing 2. The housing 2 may be an outer housing of the water treatment unit 1. The housing 2 may comprise a container 3, shown in Fig. 2. The container 3 may define a water receiving space 4 therein. In some embodiments, the housing 2 and container 3 may be integral or the same. The container 3 may comprise an inlet 5 and an outlet 6. The inlet 5 may be configured to allow water to flow into the water receiving space 4 in the container 3. The outlet 6 may be configured to allow water to flow out of the water receiving space 4 in the container 3.

As shown in Fig. 1, the water treatment unit 1 may further comprise a magnet 7. The magnet 7 may be configured to attract ferrous particle that are suspended in the water that flows through the water treatment unit 1. The magnet 7 may further be configured to retain the ferrous particles to remove the ferrous particles from the water flowing through the container 3 of the water treatment unit 1.

Referring to Fig. 2, the water treatment unit 1 may further comprise a sacrificial anode 8. The sacrificial anode 8 may be configured to provide anodic protection and to scavenge oxygen from the water flowing through the container 3 of the water treatment unit 1.

In addition, the water treatment unit 1 may comprise a filter element 9, as shown in Fig. 1. The filter element 9 may be configured to remove detritus from the water flowing through the water treatment unit 1. The magnet 7 and the sacrificial anode 8, are located within the container 3 of the water treatment unit 1. The filter element 9 may be located outside of the container 3.

In the illustrated embodiment of Fig. 1 and Fig. 2, the housing 2 is generally cylindrical. The housing 2 may also be elongate. That is, the length of the housing 2 along its longitudinal axis L is greater than the width or depth of the housing 2. However, it will be appreciated that in alternative embodiments, the housing 2 may take a different form, for example, but not limited to cuboidal or any other polygonal prism.

In some embodiments, the housing 2 may comprise a lid portion 11, or cap 11, and a base portion 12. The lid portion 11 may be welded to the base portion 12 to enable features of the water treatment unit within the container 3, such as the sacrificial anodes 8, to be removed for maintenance or to be replaced.

The container 3 may also be generally cylindrical shape. The container 3 may also be elongate. That is, the length of the container 3 along its longitudinal axis L may be greater than the width or depth of the container 2. However, it will be appreciated that in alternative embodiments, the container 3 may take a different form, for example, but not limited to cuboidal or any other polygonal prism. The longitudinal axes of the housing 2 and the container 3 may coincide. That is, the container 3 may be located centrally within the housing 2. The container 3 may be similar in its dimensions to the housing 2. However, it will be appreciated that in alternative embodiments, the shape and dimensions of the container 3 may be different to that of the housing 2.

In some embodiments, the water treatment unit 1 may further comprise a layer of insulation (not shown). The layer of insulation may be configured to prevent the temperature of the water within the container 3 from fluctuating and to prevent against condensation within the container 3. The layer of insulation may be located between the housing 2 and the container 3.

In some embodiments, the housing 2 may be formed by an external shell. The external shell of the housing 2 may be formed by stainless steel. In some embodiments, the external shell of the housing 2 may be formed by a semi-rigid polymer. In some embodiments, the layer of insulation may be, for example, but not limited to, Armaflex ^{®} insulation. The external shell of the housing 2 may be insulated with injected polyurethane.

In some embodiments, the water treatment unit 1 may further comprise a door 15. The door 15 may be configured to enable features of the water treatment unit 1 within the container 3, such as the sacrificial anodes 8, to be removed for maintenance or replacement. That is, the door 15 may be opened to allow access to the water receiving space 4 of the container 3. In some embodiments, the door 14 may be formed in both the housing 2 and the container 3. Therefore, the housing 2 does not need to be removed to access the water receiving space 4 inside the container 3. In some embodiments, the door 15 may be formed in the container 3 only. Thus, the housing 2 may need to be removed to access the water receiving space 4 inside the container 3.

As shown in Fig. 1, the container 3 may comprise the inlet 5 and the outlet 6. That is, the inlet 5 and outlet 6 may be formed by apertures that extend through the walls of the housing 2 and the container 3. The inlet 5 and the outlet 6 may be configured to allow water to flow into and out of the container 3, respectively. The container 3 may comprise a cylindrical wall 16. The cylindrical wall 16 may be closed at its top end by a top wall 17. In some embodiments, the top wall 17 may form a part of the cap 11 of the housing 2. In some embodiments, a top portion of the cylindrical wall 16 may also form a part of the cap 11. The cylindrical wall 16 may be closed at its bottom end by a bottom wall 18.

As previously alluded to, the inlet 5 may be formed by an aperture extending through the cylindrical wall. The aperture that forms inlet 5 may also extend though the housing 2, and the layer of insulation if present. The outlet 6 may be formed by an aperture in the cylindrical wall 16. The aperture that forms the outlet 6 may also extend through the housing, and layer of insulation if present.

In the depicted embodiment, the inlet 5 is located proximate the top wall 17 of the container 3. The outlet 6 is also located proximate the top wall 17. The outlet 6 may be located at the same vertical height as the inlet 5. The outlet 6 may be located diametrically opposite the inlet 5. However, it will be appreciated that in an alternative embodiment, the outlet 6 may be circumferentially spaced by a different amount from the inlet 5, or the outlet 6 may be located such that it is slightly closer to or slightly further away from the top wall 17.

Advantageously, the positioning of the outlet 6 proximate the top wall 17 of the container 6 means that detritus may have a more difficult time exiting the container 3. This is due to the water flow path through the water treatment unit 1, as will be described in more detail hereinafter. In essence, the water must flow from the inlet 5 towards the bottom wall 18 of the container 3 before flowing back up towards the outlet 6. This may prevent larger and heavier detritus from moving with the flow of water, thus improving the quality of the water flowing out of the water treatment unit 1 and within the water treatment system 100.

In the present embodiment, the inlet 5 and outlet 6 are shown as being on different sides of the container 3. In some embodiments, the container 3 may comprise a plurality of inlets 5. The plurality of inlets 5 may be circumferentially spaced around the container 3. The plurality of inlets 5 may be used simultaneously, but are predominantly provided such that the water treatment unit 1 can be correctly orientated with the pipe work of an existing water system 100. Therefore, only one inlet 5 is required to be connected to the water system 100 and minimal modifications to the water system 1 are required to incorporate the water treatment unit 1. The water treatment unit 1 may need to be correctly orientated so that a display, discussed in more detail hereinafter, may be viewed by an engineer. Any surplus inlets 5 may be closed or blocked prior to operation.

As shown in Fig. 2, the water treatment unit 1 may further comprise a deaerator element 21. That is, the container 3 may comprise a deaerator element 21. The deaerator element 21 may extend across the container 3. The deaerator element 21 may extend across the container 3 proximate to the top wall 17. However, the deaerator element 21 may extend across the container 3 below the inlet 5. Thus, the water that flows into the container 3 through the inlet 5 is forced to flow past or through the deaerator element 21. As a result, the water flowing into the container from the inlet 5 is deaerated. In some embodiments, the deaerator element 21 may extend across the container 3 below the outlet 6.

The deaerator element 21 may divide the water receiving space 4 of the container 3 into an upper section 22 and a lower section 23. The upper section 22 of the water receiving space 4 in the container 3 may be located above the deaerator element 21. The lower section 23 of the water receiving space 4 in the container 3 may be located below the deaerator element 21.

The deaerator element 21 may be a mesh. The mesh may be, for example, but not limited to, a stainless steel mesh. The mesh may have an element size of about 4 mm². That is, the area of the gaps defined by the mesh may be about 4 mm². The deaerator element 21 may comprise two layers of mesh. The two layers of mesh may be offset with respect to one another to further reduce the effective gap size. When the water is forced to flow down through the deaerator element 21, or mesh, the mesh breaks down the micro-bubbles in the water flowing downwards and causes the microbubbles to be released from the water flow. Due to their lower density, the microbubbles rise towards the top wall 17 of the container 3 once they are separated from the water flowing through the container 3.

The deaerator element 21 may be electrically connected to the container 3. Thus, the surface area of the cathode in the water treatment unit 1 can be increased. As a result, a higher rate of reaction of particles and gases in the water with the sacrificial anode can be achieved. Consequently, the water treatment unit 1 may provide superior performance in improving the quality of the water flowing through the container 3.

The upper section 22 of the water receiving space 4 of the container 3 may be configured to cause a cyclonic effect in the water flowing into the upper section 22 of the water receiving space 4 from the inlet 5. In some embodiments, the cyclonic effect may be caused by the inlet 5 being angled such that the water flows toward an inner surface of the cylindrical wall 16 of the container 3 rather than being directed diametrically. That is, the inlet 5 may be angled such that it faces part of the cylindrical wall adjacent to the inlet 5. Referring to Fig.3, it can be seen that in some embodiments, the inlet 5 may comprise a curved tube 25. The curved tube 25 may extend through the aperture forming the inlet 5 and bend to one side to direct water flowing into the upper section 22 of the water receiving space 4 of the container 3 in a generally circumferential direction.

In some embodiments, the container 3 may comprise a flow diverter (not shown). The flow diverter may be located proximate to, or at least partially covering, the inlet 5 of the container 3. The flow diverter may be configured to cause the cyclonic effect in the water flowing into the upper section 22 of the water receiving space 4 of the container 3. That is, the flow diverter may be configured to divert water flowing radially from the inlet 5 relative to the container 3 towards a portion of the inner surface of the cylindrical wall 16 of the container 3 adjacent the inlet 5.

The curved tube 25, angled inlet 5, or other form of flow diverter may be configured to induce a vortex in the upper section 22 of the water receiving space 4 in the container 3. The vortex may improve separation efficiency. Thus, by directing the flow of water in a circumferential direction, a proportion of the gas dissolved in the flow of water can be separated from the flow of water. The circumferential water flow can also help separate detritus from the flow of water by causing heavier particles to move to the outside of the flow of water.

As a result, the combination of the cyclonic or vortex flow and the deaerator mesh 21 provides enhanced deaeration of the water flowing into the water receiving space 4 of the container 3 from the inlet 5.

The deaerator element 21 may comprise a central aperture 26. The central aperture 26 may be configured to receive an outlet tube 27, as will be discussed in more detail hereinafter. The central aperture 26 of the deaerator element 21 may have its centre aligned with the longitudinal axis L of the container 3. That is, the longitudinal axis L of the container 3 may extend through the centre of the aperture 26. The central aperture 26 may be circular. The circular central aperture 26 may be concentric with the container 3. In some embodiments, an internal edge 28 of the aperture 26 in the deaerator element 21 may be in contact with the outlet tube 27.

As shown in Fig. 2, the outlet tube 27 may extend along substantially the length of the lower section 23 of the water receiving space 4 of the container 3. A first portion 27a of the outlet tube 27 in the lower section 23 of the water receiving space 4 of the container 3 may extend parallel to the longitudinal axis L of the container 3. The first portion 27a of the outlet tube 27 in the lower section 23 of the water receiving space 4 of the container 3 may extend coaxially with the container 3. That is, the longitudinal axis of the first portion 27a of the outlet tube 27 in the lower section 23 of the water receiving space 4 of the container 3 may extend coaxially with the longitudinal axis L of the container 3.

The first portion 27a of the outlet tube 27 in the lower section 23 of the container 3 may be perforated to form a perforated section 27b. In some embodiments, only a lower section of the first portion 27a of the outlet tube 27 in the lower section 23 of the container 3 may be perforated. For example, in some embodiments, the bottom 400 mm of the outlet tube 27 may be perforated. The perforated section 27b of the outlet tube 27 may be configured to allow water to enter the outlet tube 27 from the lower section 23 of the water receiving space 4 in the container 3. The perforated section 27b may be essential in embodiments where the lower end of the outlet tube 27 is closed.

The outlet tube 27 may further comprise a second portion 27c. The second portion 27c may extend from the first portion 27a of the outlet tube 27 in the central aperture 26 of the deaerator element 21 to the aperture forming the outlet 6. Therefore, the second portion 27c of the outlet tube 27 maybe located above the deaerator element 21. That is, the second portion 27c of the outlet tube 27 may be located in the upper section 22 of the water receiving space 4 of the container 3. The second portion 27c of the outlet pipe 26 may comprise a curved section and a radially extending section. The curved section may change the direction of the flow of water in the first portion 27a of the outlet tube 27 such that the water is turned from flowing parallel to the longitudinal axis L of the container 3 to perpendicular to the longitudinal axis L of the container 3. The radially extending section of the second portion 27c of the outlet tube 27 may extend perpendicularly to the first portion 27a of the outlet tube 27, i.e., perpendicular to the longitudinal axis L of the container 3.

The deaerator element 21 may further comprise a peripheral edge 29. The peripheral edge 29 of the deaerator element 21 may be configured to abut an inner surface of the cylindrical wall 16 of the container 3.

Thus, all the water in the upper section 22 must pass through the deaerator mesh 21 in order to reach the lower section 23 of the water receiving space 4 in the container 3 so that it can enter the outlet tube 27. Consequently, the amount of gas removed from the water in the water treatment unit 1 is maximised. It will be appreciated that in alternative embodiments, the central aperture 31 may be any other shapes, such as, for example but not limited to, triangular, square, or hexagonal.

It will be appreciated that in some embodiments, the deaerator element 21 may comprise a plurality of layers of mesh. For example, the deaerator element 21 may comprise two layers of stainless steel mesh. The plurality of layers of mesh may be offset with respect to each other. Thus, the size of the gaps in the mesh may effectively be reduced.

The deaerator element 21 may be electrically connected to the container 3. Thus, the surface area of the cathode can be increased. As a result, a higher rate of reaction of particle and gases in the water with the sacrificial anode can be achieved.

Referring back to Fig. 2, the water treatment unit 1 may further comprise an air pressure vent 31. The air pressure vent 31 may be an automatic air vent .The air pressure vent 31 may be located in the top wall 17 of the container 3. The air pressure vent 31 may extend from the upper section 22 of the water receiving space 4 of the container 3 through the top wall of the container 3, through any layer of insulation present, and through the shell of the housing 2 if different to the container 3. The air pressure vent 31 may be configured to allow gases separated from the flow of water to be vented out of the container 3 when the air pressure in the container 3 exceeds a predetermined level. The air pressure vent 31 may also allow gases created as a product of water reacting with the sacrificial anode 8 to be released from the container 3. These gases may be hydrogen. That is, the air pressure vent 31 may be configured to allow gases in the form of released microbubbles to exit the container 3. The air pressure vent 31 may be configured to automatically open only to allow gas to leave the container 3. That is, the air pressure vent 31 may be configured to allow air to leave the container 3 independently of the water pressure in the water treatment unit 1.

In some embodiments, the air pressure vent 31 may comprise a vent pipe 32 with a vent valve 33. The vent valve 33 may be installed at the end of the vent pipe 32 located outside of the housing 2. The vent valve 33 may be an automatic vent valve configured to open automatically once a predefined pressure threshold has been exceed.

The water treatment unit 1 may also comprise an anti-vacuum pipe 34. The anti-vacuum pipe 34 may be configured to allow air into the water receiving space 4 in the container 3 when the container 3 is being drained such that a vacuum is not created within the container 3 during draining. The anti-pressure vacuum pipe 34 may also be configured to allow the quick release of air during re-filing of the container 3.

As previously mentioned, the water treatment unit 1 may further comprise at least one magnet 7, as shown in Fig. 4. In the present embodiment, the water treatment unit 1 comprises two magnets, although only one of the magnets 7 is shown in the cut-away section of Fig. 4. The magnet 7 is generally cylindrical in shape. However, it will be appreciated that the magnet 7 may be any other shape. Furthermore, it will be appreciated that in alternative embodiments, the water treatment unit 1 may comprise a single magnet 7 or more than two magnets 7.

As shown in Fig. 4, the at least one magnet 7 may be located proximate to the bottom wall 18 of the container 3. In some embodiments, the at least one magnet 7 may be located in the water receiving space 4 in the container 3 proximate to the bottom wall 18. That is, the at least one magnet 7 may be located in the lower section 23 of the water receiving space 4 in the container 3. The at least one magnet 7 may be configured to attract and hold ferrous particles, via magnetism, in the flow of water through the lower section 23 of the water receiving space 4 in the container 3. Therefore, the at least one magnet 7 is configured to remove ferrous particles from the flow of water through the water treatment unit 1.

As previously mentioned, the present embodiment of the invention may comprise two magnets 7: a first magnet 7a and a second magnet 7b. The first magnet 7a may be located vertically beneath the inlet 5 of the container 3. The second magnet 7b may be located vertically beneath the outlet 6 of the container 3.

The at least one magnet 7 may be orientated such that the at least one magnet extends at an acute angle to the longitudinal axis L of the container 3. The at least one magnet 7 may be orientated such that one end of the at least one magnet 7 is positioned closer to the bottom wall 18 of the container 3 than the other end. That is, an end of the at least one magnet 7 that is located furthest in the radial direction from the central longitudinal axis L may be located further from the bottom wall 18 of the container 3 than the end of the at least one magnet 7 that is located closest in the radial direction to the central longitudinal axis L. The at least one magnet 7 may slope towards the centre of the bottom wall 18 of the container 3.

In some embodiments, the at least one magnet 7 may be orientated such that the at least one magnet 7 extends perpendicularly to the longitudinal axis of the container 3.

The at least one magnet 7 may be orientated such that the at least one magnet 7 is spaced from the diameter of the container 3. The at least one magnet 7 may comprise a plurality of magnets 7 that extend perpendicularly to the longitudinal axis L. The plurality of magnets 7 may extend parallel to each other. The plurality of magnets 7 may extend in the same plane that extends perpendicularly to the longitudinal axis L or may be offset in the longitudinal direction.

The at least one magnet 7 may be a dry magnet. The at least one magnet 7 may be formed from neodymium. Optionally, the at least one magnet 7 may be formed from neodymium with a stainless steel coating. The stainless steel coating may increase the durability of the at least one magnet 7 and make maintenance of the at least one magnet 7 easier.

The at least one magnet 7 may be located in a magnet housing 35. The magnet housing 35 may have a similar shape to the at least one magnet 7. That is, the magnet housing 35 may be cylindrical. The magnet housing 35 may comprise an aperture 36 configured to receive the at least one magnet 7. The magnet housing 35 may be orientated as described above in relation to the at least one magnet 7. The magnet housing 35 may be configured to prevent the water in the water treatment unit 1 from contacting the at least one magnet 7. Thus, the magnetic particles in the water may abut and be held against the magnet housing 35, by the magnetic force of the at least one magnet 7, without contacting or damaging the at least one magnet 7.

When the at least one magnet 7 is housed in the magnet housing 35, the at least one magnet 7 may be removed from the magnet housing 35 which may cause the magnetic particles on the magnetic housing 35 to fall into the water in the container 3. The at least one magnet 7 may be removed from the magnet housing 35 by a handle (not shown) located on one end of the at least one magnet 7 closest to the opening of the aperture 36 of the magnet housing 35. These magnetic particles may then be drained out of the water treatment unit 1, as will be explained in more detail hereinafter.

The cyclonic flow of water having passed through the deaerator element 21 will continue to flow downwards in its circular motion through the lower section 23 of the water receiving space 4 in the container 3 down towards the bottom wall 18 of the container 3. The cyclonic flow of the water in the lower section 23 of the water receiving space 4 in the container 3 will cause the heavier ferrous (magnetic) particles and detritus to moved outwards towards the cylindrical wall 16. As the water flows closer to the at least one magnet 7 proximate the bottom wall 18 of the container 3, the ferrous particles in the flow of water will be attracts towards and held in position by the at least one magnet 7. The larger non-ferrous particles and detritus may have heavy enough such that they settle on or proximate to the bottom wall 18 of the container 3.

Referring back to Fig. 2, the water treatment unit 1 may comprise at least one sacrificial anode 8, as previously mentioned. As shown in Fig. 2, the water treatment unit 1 may comprise a plurality of sacrificial anodes 8. Two sacrificial anodes 8 are shown in Fig. 2 due the cross-sectional nature of the illustration. Each of the plurality of sacrificial anodes 8 may extend parallel to and spaced from the central longitudinal axis L of the container 3. However, briefly referring to Fig. 3, it can be seen that the water treatment unit 1 may comprise twelve sacrificial anodes 8. In some embodiments, the water treatment unit 1 may comprise up to 60 sacrificial anodes 8.

The at least one sacrificial anode 8 may be located in the lower section 23 of the water receiving space 4 of the container 3. That is, the at least one sacrificial anode 8 may be located below the deaerator element 21.

The at least one sacrificial anode 8 may be formed from a metal alloy with a more 'active' voltage than the material of the features of the water system 100 and the water treatment unit 1. That is, the sacrificial anode 8 may have more negative reduction potential or more positive electrode potential. Thus, the anode 8 is sacrificial in the sense that the anode material is configured to be consumed during the process of improving the quality of the water flowing through the water treatment unit 1. The anode 8 may be dissolved in the water, which scavenges oxygen in the water and increases the pH of the water. The oxygen in the water is scavenged by reacting with the material of the sacrificial anode 8. The products of this reaction provide inorganic salts in the water, which increase the pH of the water. The lower oxygen content and higher pH of the water reduces the reactions taking place between the water and components of the water treatment unit 1 and water system 100.

In the present embodiment, the at least one sacrificial anode 8 may be formed from magnesium. The at least one sacrificial anode 8 may be formed using high potential magnesium anodes. The at least one sacrificial anode 8 may be a pure magnesium bare anode. In alternative embodiments, the at least one sacrificial anode 8 may be formed from, for example, but not limited to, a magnesium alloy, aluminium, an aluminium alloy, zinc, or a zinc alloy.

Thus, the corrosion process may be inhibited within the water treatment unit 1 because the oxygen in the flow of water and the water react with the sacrificial anode 8 instead of the iron and steel elements of the water treatment unit 1 and the water system 100 due to the presence of the more 'active' sacrificial anode(s) 8. This reduces the oxygen content in the water that flows through the water treatment unit 1 and into the water system 100. This also produces reaction products, such as, for example, magnesium hydroxide, which increases the pH level of the water and reduces corrosion.

Furthermore, the use of the at least one magnet 7 and the at least one sacrificial anode 8 may remove minerals and salts from the flow of water, which in turn reduces the conductivity of the flow of water, and thus inhibits corrosion.

As shown in Fig. 3, when the water treatment unit 1 comprises a plurality of sacrificial anodes 8, the sacrificial anodes 8 are each spaced in the radial direction from the central longitudinal axis L of the container 3. Each of the sacrificial anodes 8 may be spaced from the central longitudinal axis L of the container 3 by the same radial distance. Thus, the plurality of sacrificial anodes 8 may effectively form a concentric circle with the longitudinal axis L and the cylindrical wall 16 of the container 3. The plurality of sacrificial anodes 8 may be evenly spaced from each other such that the distance between each pair of adjacent sacrificial anodes 8 in the circumferential direction is the same.

The at least one sacrificial anode 8 may be a meshed sacrificial anode 8. That is, each of the sacrificial anodes 8 may be surrounded by a mesh (not shown). The mesh may be configured to act as a filter. That is, the mesh may be configured to prevent magnesium oxide, or other particles, formed on the sacrificial anode 8 from entering the water flow. However, it will be appreciated that each of the sacrificial anodes 8 of the present invention may be unmeshed, i.e. not be surrounded by a mesh. Some advantages associated with the unmeshed anodes are less disruption of the flow of water to the sacrificial anodes 8. Furthermore, it will be appreciated that in the present invention the sacrificial anodes 8 do not require a mesh because the water treatment unit 1 comprises a filter 9 that is configured to filter out particles and detritus, such as any magnesium oxide from the sacrificial anodes 8 in the flow of water.

The water treatment unit 1 may further comprise an anode support 41. The anode support 41 may be configured to suspend the at least one sacrificial anode 8 within the lower section 23 of the water receiving space 4 of the container 3. The anode support 41 may comprise a carousel 42. The carousel 42 may be configured to hold the plurality of sacrificial anodes 8 within the lower section 23 of the water receiving space 4 in the container 4. The anode support 41 may further comprise a pair of upper arms 43. The pair of upper arms 43 may extend from the inner surface of the cylindrical wall 16 of the container 3 to an upper end of the carousel 41. The anode support 41 may further comprise a pair of lower arms 44. The pair of lower arms 44 may extend from the bottom wall 18 of the container 3 to a lower end of the carousel 41.

The carousel 42 may comprise an anode guide 46. The anode guide 46 may comprise a tubular body 47 having a top plate 48 proximate the upper arms 43 and a bottom plate 49 proximate the lower arms 44. The top plate 48 may comprise at least one anode receiving aperture 51. The top plate 48 may comprise an anode receiving aperture 51 for each of the sacrificial anodes 8 of the water treatment unit 1. Each anode receiving aperture 51 may be configured to receive and hold one sacrificial anode 8. The bottom plate 48 may be connected to each sacrificial anode 8 by an anode bolt 52. That is, the anode guide 46 may comprise an anode bolt 52 for each sacrificial anode 8 carrier by the carousel 42. The anode bolt 52 may be configured to connect the bottom plate 48 to the sacrificial anode 8.

The carousel 42 may further comprise an upper bearing 54 and lower bearing 55. The upper bearing 54 may be located between the anode guide 46 and the pair of upper arms 43. The lower bearing 55 may be located between the anode guide 46 and the pair of lower arms 44. The upper and lower bearings 54, 55 may be configured to allow the anode guide 46 to rotate relative to the upper and lower arms 43, 44. Thus, the carousel 42 can be rotated to allow easy replacement and/or maintenance of the sacrificial anodes 8.

The upper and lower bearings 54, 55 may be formed from an electrically insulating material configured to insulated the sacrificial anodes 8 from the container 3.

The water treatment unit 1 may further comprise a galvanometer 57. The galvanometer 57 may be connected to the bottom plate 49, or anode bolt 52, by a wire 58. The galvanometer 57 may also be connected to a test button 59. The test button 59 may be located on the outer surface of the housing 2 or container 3. The galvanometer 57 may be located in the cylindrical wall 16 of the container 3.

The outlet tube 27 may extend through the centre of the carousel 42. The outlet tube 42 may extend through the centre of the tubular body 47 of the anode guide 46 and through the centre of the upper bearing 54. In some embodiments, the lower bearing 55 may close the bottom end of the outlet tube 27.

Referring back to Fig. 1, the water treatment unit 1 may further comprise a filter element 9, as previously mentioned. In the present embodiment, the filter element 9 may be located outside of the container 3. That is, the filter element 9 may be located on the outlet side of the outlet 6. The filter element 9 may be placed downstream of the outlet 6. In some embodiments, the filter element 9 may be fluidly connected to the downstream end of the outlet tube 27.

The filter element 9 may be a cylindrical filter element. The filter element 9 may be positioned such that the flow of water out of the container 3 through the outlet pipe 27 must flow through the filter element 9. Thus, any ferrous particles that are not caught by the magnet 7 or loose products resulting from a reaction on the at least one sacrificial anode 8 or detritus in the flow of water can be filtered out of the flow of water by the filter element 9. Therefore, detritus and other materials in the flow of water can be prevented from re-entering the water system 100 from the water treatment unit 1.

In some embodiments, the filter element 9 comprise a filter screen or mesh. In some embodiments, the filter screen or mesh of the filter element 9 may be stainless-steel filter. In some embodiments, the filter screen or mesh of the filter element 9 may be formed by a 40 um screen or mesh. That is, the filter screen or mesh may have apertures capable of filtering detritus out of the flow of water that is larger than 40 um. In some embodiments, the filter element 9 may comprise a 40 um stainless steel filter screen or mesh. In some embodiments, the screen or mesh may be of a different size. For example, in some embodiments, the filter element 9 may be formed by a screen or mesh in the range of about 1 um to about 100 um. That is, the filter screen or mesh may have apertures having a dimension of about 1 um to about 100 um. The apertures may be uniform, i.e. each aperture in the screen or mesh may be the same size. The size of the screen or mesh may be chosen depending on the water quality.

Referring to Fig. 2, the water treatment unit 1 may further comprise a drain 61. The drain 61 may be located at the bottom wall 18 of the container 3. That is, the drain 61 my comprise an aperture 62 in the bottom wall 18 of the container 3. By placing the drain 61 at the bottom of the container 3, it is possible to remove any products in the water from the container 3.

The drain 61 my comprise a drain pipe 63 and a drain valve 64. The drain pipe 63 may be configured to connect the aperture 62 in the bottom wall 18 of the container 3 to an existing drain manifold or pipe. The aperture 62 may be generally circular, although it will be appreciated that the aperture 64 may take any shape.

The drain pipe 63 may extend away from the bottom wall 18 of the container 3. In the present embodiment, the drain pipe 63 may comprise a first portion that extends vertically downwards and a second portion that extends substantially perpendicularly to the first portion. The first and second portions of the drain pipe 63 may be connected by a curved portion. The drain valve 64 may be located along the drain pipe 63. In some embodiments, the drain valve 64 may be located at the downstream end of the drain pipe 63. The drain vale 64 may be configured to be opened to allow the container 3 to be drained.

The water treatment unit 1 may further comprise a stand portion 67. The stand portion 67 may be configured to maintain the housing 2 or container 3 spaced from the ground to accommodate the drain 61. In some embodiments, the stand portion 67 may be an extension of the housing 2 or container 3. The stand portion 67 may comprise at least one leg 68. In some embodiments, the at least one leg 69 may extend circumferentially from the bottom of the housing 2 or container 3. The at least one leg 68 may comprise an aperture 69 through which the drain pipe 63 may extend.

The water treatment unit 1 may further comprise a sight window 71. The sight window 71 may comprise an aperture 72 extending through the container 3 and housing 2, if separate to the container 3. The sight window 71 may comprise an outer window and an inner window located at either end of the aperture 72 configured to maintain pressure in the container 3. The sight window 71 may be configured to allow an operator or maintenance worker to view and assess the condition of the at least one sacrificial anode 8.

In some embodiments, the water treatment unit 1 may comprise an aperture (not shown), also referred to as a pocket, configured to receive a temperature gauge. The aperture may be closed when the temperature gauge is not received in the aperture. In some embodiments, the water treatment unit 1 may comprise a temperature gauge (not shown) located in the aperture.

Referring to Fig. 4, the water treatment unit 1 can be incorporated into an existing water system 100 or included in a new water system, both schematically represented in Fig. 4. Water from the water system 100 may flow into the container of the water treatment unit 1 via the inlet 5.

Referring to Fig. 1 and Fig. 2, the water flows through the inlet 5 to the container 3, it flows through the curved tube 25 and is directed out of the curved tube 25 towards the inner surface of the container 3 in the upper section 22 of the water receiving space 4. The change of direction of the flow of water from predominately radial to generally circumferential sets up cyclonic flow within the water receiving space 4 of the container 3.

The cyclonic flow generates a vortex. The vortex or cyclonic flow causes some gases dissolved in the flow of water to be released. The released gases move upwards and exit the container 3 via the pressure vent 31 when the pressure in the container 3 exceeds a predetermined threshold and the vent valve 33 opens.

As the flow of water circles the upper section 22 of the water receiving space 4 in the container 3, it gradually move towards the deaerator element 21. As the flow of water passes though the deaerator element 21, the mesh causes any further microbubbles to be released from the water. The microbubbles released from the water by the deaerator element 21 move upwards and exit the container via the pressure vent 31 when the pressure in the container 3 exceeds a predetermined threshold and the vent valve 33 opens.

Once the flow of water passes through the deaerator element 21, it enters the lower section 23 of the water receiving space 4 of the container 3 and continues its cyclonic flow. The flow of water continues to gradually move towards the bottom wall 18 of the container 3. As the water spirals down towards the bottom wall 18 of the container 3 it flows past the at least one sacrificial anode 8. Any oxygen remaining in the flow of water may react with the at least one sacrificial anode 8. This lowers the oxygen content of the flow of water and inhibits corrosion by removing reactants of the corrosion reaction. The process of removing the oxygen from the flow of water continues as the flow of water flows towards the bottom wall 18 of the container 3.

As the flow of water approaches the bottom wall of the container 3, the water passes proximate to the magnets 7 located in the magnet housings 35. The ferrous particles in the flow of water are attracted towards the magnet 7 and held against the magnet housing 35 and removed from the flow of water. Thus, the ferrous particles are unable to rust and build up within the water system 100 and so cannot reduce heat transfer efficiency or cause wear on water system elements, such as pumps.

In order for the flow of water to flow out of the container 3, the water must enter the outlet pipe 27 through the perforated section 27b in the first portion 27a of the outlet tube 27 in the lower section 23 of the container 3. The water then flows up the first portion 27a of the outlet pipe 27 and it to second portion 27c of the outlet pipe 27 before flowing out of the outlet 6.

The flow of water is then passed though the filter element 9. At this stage, detritus and sludge are filtered out of the flow of water. This removes minerals etc. from the flow of water which reduces the conductivity of the water and further inhibits corrosion.

Once the flow of water has passed through the filter element 9, the water leaves the water treatment unit 1. Thus, the water that leaves the water treatment unit 1 is of a better quality than the water that entered the water treatment unit 1 because it has a lower oxygen content, a higher pH, and less mineral content therefore less conductivity. Each of these parameters help to provide water that is less likely to cause corrosion of the elements of a water system 100.

Furthermore, the water treatment unit 1 is able to improve the quality of the water within the water system 100 without the use of chemicals or external power and with minimum maintenance.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the inventions as defined by the claims or limitations on equivalents to the claims, and that other embodiments may be utilised and modifications may be made without departing from the scope of the claimed invention.

Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be in the future.

### Clauses

1. A water treatment unit for improving the quality of water in a water system; the water treatment unit comprising:
   a container having an inlet and an outlet configured to allow water to flow into and out of the container, respectively;
   at least one magnet configured to attract ferrous particles and retain ferrous particles to remove the ferrous particles from the water flowing through the container;
   at least one sacrificial anode configured to provide anodic protection and scavenge oxygen from the water flowing through the container; and
   a filter element configured to remove detritus from the water flowing out of the container;
   wherein the at least one magnet and the at least one sacrificial anode are located in the container, and the filter element is located outside of the container downstream of the outlet.
2. The water treatment unit according to clause 1, wherein the container comprises a deaerator element that extends across the container and divides the container into an upper section comprising the inlet and the outlet, and a lower section comprising the at least one magnet and the at least one sacrificial anode.
3. The water treatment unit according to clause2, wherein the deaerator element comprises a mesh.
4. The water treatment unit according to clause 2 or clause 3, wherein the deaerator element is electrically connected to the container to increase the anodic surface of the water treatment unit.
5. The water treatment unit according to any one of clause 2 to clause 4, wherein the deaerator element comprises an aperture configured to receive an outlet pipe.
6. The water treatment unit according to clause 5, wherein an outlet pipe extends from the lower section of the container through the aperture in the deaerator element and to the outlet.
7. The water treatment system according to clause 6, wherein the outlet pipe comprises a perforated section configured to allow water to pass from the lower section of the container into the outlet pipe.
8. The water treatment unit according to any one of the preceding clauses, wherein the filter element is a cylindrical filter element configured such that the water flowing through the container has to pass through the filter element before the water can re-enter a water system.
9. The water treatment unit according to any one of the preceding clauses, wherein the filter element comprises a 40 um mesh.
10. The water treatment unit according to any one of the preceding clauses, wherein the filter element comprises a stainless steel mesh.
11. The water treatment unit according to any one of the preceding clauses, wherein the at least one sacrificial anode is located in the lower section of the container.
12. The water treatment unit according to clause 11, comprising a plurality of sacrificial anodes.
13. The water treatment unit according to clause 12, wherein the plurality of sacrificial anodes are spaced around the outlet pipe in the lower section of the container.
14. The water treatment unit according to clause 11 or clause 12, further comprising an anode support configured to suspend the at least one sacrificial anode within the lower section of the container.
15. The water treatment unit according to any one of the preceding clauses, wherein the at least one sacrificial anode is an unmeshed anode.
16. The water treatment unit according to any one of the preceding clauses, wherein the at least one sacrificial anode is formed from magnesium.
17. The water treatment unit according to any one of the preceding clauses, wherein the at least one magnet is located proximate a bottom wall of the container.
18. The water treatment unit according to any one of the preceding clauses, wherein the magnet is located in a magnet housing.
19. The water treatment unit according to clause 18, wherein the magnet housing extends into the lower section of the container.
20. The water treatment unit according to any one of clause 17 to clause 19, wherein the magnet extends at an acute angle to the longitudinal axis of the container.
21. The water treatment unit according to any one of the preceding clauses, wherein the magnet is formed from neodymium, and optionally comprises a stainless steel coating.
22. The water treatment unit according to any one of the preceding clauses, further comprises a pressure vent located in a top wall of the container, the pressure vent being configured to allow gas to exit the container.
23. The water treatment unit according to any one of the preceding clauses, further comprises a drain located in the bottom wall of the container, the drain comprising a drain pipe and a drain valve configured to allow water to exit the container to be drained.
24. A water system comprising a water treatment unit according to any one of the preceding clauses.

## Claims

1. A water treatment unit for improving the quality of water in a water system; the water treatment unit comprising:
a container having an inlet and an outlet configured to allow water to flow into and out of the container, respectively;
at least one magnet configured to attract ferrous particles and retain ferrous particles to remove the ferrous particles from the water flowing through the container;
at least one sacrificial anode configured to provide anodic protection and scavenge oxygen from the water flowing through the container; and
a filter element configured to remove detritus from the water flowing out of the container;
wherein the at least one magnet and the at least one sacrificial anode are located in the container, and the filter element is located outside of the container downstream of the outlet.

2. The water treatment unit according to claim 1, wherein the container comprises a deaerator element that extends across the container and divides the container into an upper section comprising the inlet and the outlet, and a lower section comprising the at least one magnet and the at least one sacrificial anode.

3. The water treatment unit according to claim 2, wherein the deaerator element comprises a mesh.

4. The water treatment unit according to claim 2 or claim 3, wherein the deaerator element is electrically connected to the container to increase the anodic surface of the water treatment unit.

5. The water treatment unit according to any one of claim 2 to claim 4, wherein the deaerator element comprises an aperture configured to receive an outlet pipe.

6. The water treatment unit according to claim 5, wherein an outlet pipe extends from the lower section of the container through the aperture in the deaerator element and to the outlet, and optionally,
wherein the outlet pipe comprises a perforated section configured to allow water to pass from the lower section of the container into the outlet pipe.

7. The water treatment unit according to any one of the preceding claims, wherein at least one of the following:
the filter element is a cylindrical filter element configured such that the water flowing through the container has to pass through the filter element before the water can re-enter a water system,
the filter element comprises a 40 um mesh, and
the filter element comprises a stainless steel mesh.

8. The water treatment unit according to any one of the preceding claims, wherein the at least one sacrificial anode is located in the lower section of the container, and optionally,
the water treatment unit comprises a plurality of sacrificial anodes, and optionally,
wherein the plurality of sacrificial anodes are spaced around the outlet pipe in the lower section of the container, and optionally,
the water treatment unit further comprises an anode support configured to suspend the at least one sacrificial anode within the lower section of the container.

9. The water treatment unit according to any one of the preceding claims, wherein at least one of the following:
the at least one sacrificial anode is an unmeshed anode, and
the at least one sacrificial anode is formed from magnesium.

10. The water treatment unit according to any one of the preceding claims, wherein the at least one magnet is located proximate a bottom wall of the container.

11. The water treatment unit according to any one of the preceding claims, wherein the magnet is located in a magnet housing, and optionally,
wherein the magnet housing extends into the lower section of the container.

12. The water treatment unit according to claim 10 or claim 11, wherein the magnet extends at an acute angle to the longitudinal axis of the container.

13. The water treatment unit according to any one of the preceding claims, wherein the magnet is formed from neodymium, and optionally comprises a stainless steel coating.

14. The water treatment unit according to any one of the preceding claims, further comprises at least one of the following:
a pressure vent located in a top wall of the container, the pressure vent being configured to allow gas to exit the container, and
a drain located in the bottom wall of the container, the drain comprising a drain pipe and a drain valve configured to allow water to exit the container to be drained.

15. A water system comprising a water treatment unit according to any one of the preceding claims.
